# EUROPEAN PATENT APPLICATION

(11) **EP 4 607 552 A1**
(43) Date of publication of application: **27.08.2025**
(21) Application number: 25157207.9
(22) Date of filing: 11.02.2025
(51) Int. Cl.: H01G 11/80, H01M 50/627, H01M 50/636, H01M 50/645

(54) **ELECTRICAL ENERGY STORAGE DEVICE AND MANUFACTURING METHOD FOR THE SAME**

(30) Priority: 26.02.2024 JP 2024026693
(71) Applicant: Prime Planet Energy & Solutions, Inc., Chuo-ku, Tokyo 103-0022 (JP)
(72) Inventor: MAEDA, Hitoshi, Tokyo, 103-0022 (JP)
(74) Representative: Kuhnen & Wacker Patent- und Rechtsanwaltsbüro PartG mbB

(57) **Abstract**

A manufacturing method disclosed herein includes a preparing step of preparing an assembly including a case (10) in which a resin member (17) is attached to an electrolyte solution injection hole (15), and a sealing step of sealing the electrolyte solution injection hole (15) after an electrolyte solution is injected. The resin member (17) includes a shaft part (17s) that is hollow, a penetration hole (17h), and a surplus part (17e) that rises up at a periphery of the penetration hole (17h) outside the case (10). In the sealing step, the penetration hole (17h) is closed by melting at least the surplus part (17e).

## Description

### BACKGROUND OF THE DISCLOSURE

### 1. Field

The present disclosure relates to an electrical energy storage device, and a manufacturing method for the same.

### 2. Background

One of the conventionally known electrical energy storage devices includes a case that includes an electrolyte solution injection hole, an electrode body and an electrolyte solution that are disposed in the case, and a sealing plug that seals the electrolyte solution injection hole. References related to this include Japanese Patent Application Publication No. 2017-195093, Japanese Patent Application Publication No. 2015-111527, and Japanese Translation of PCT International Application Publication No. 2015-536033. For example, Japanese Patent Application Publication No. 2017-195093 discloses an electrical energy storage device including a main body part (first member) that includes an electrolyte solution injection hole and is integrated with a case, and a sealing plug (second member) that closes the electrolyte solution injection hole. According to Japanese Patent Application Publication No. 2017-195093, after an electrolyte solution is injected through the electrolyte solution injection hole of the main body part, the sealing plug is inserted into the electrolyte solution injection hole and the main body part and the sealing plug are bonded together by laser welding.

### SUMMARY

From the viewpoints of improving the workability and reducing the cost, an easier manufacturing method is demanded.

The present disclosure provides a manufacturing method for an electrical energy storage device, including: a preparing step of preparing an assembly including a case that includes an electrolyte solution injection hole, in which a resin member is attached to the electrolyte solution injection hole, and an electrode body that is disposed in the case; a liquid injecting step of injecting an electrolyte solution from the electrolyte solution injection hole into the case; and a sealing step of sealing the electrolyte solution injection hole after the liquid injecting step. The resin member includes a shaft part that is hollow and is attached to the electrolyte solution injection hole, a penetration hole that penetrates the resin member along an axial line of the shaft part, and a surplus part that is provided integrally with the shaft part and rises up at a periphery of the penetration hole outside the case, and in the sealing step, the penetration hole is closed by melting at least the surplus part.

In the present disclosure, the electrolyte solution injection hole is closed by melting a part of the resin member that is attached to the injection hole (at least the surplus part). Therefore, the electrolyte solution injection hole can be easily sealed. In addition, since it is unnecessary to prepare a sealing plug (second member) separately, the number of parts can be reduced compared to the conventional art.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating an electrical energy storage device 100 according to an embodiment;
FIG. 2 is a schematic longitudinal cross-sectional view taken along line II-II in FIG. 1;
FIG. 3 is a longitudinal cross-sectional view schematically illustrating a vicinity of an electrolyte solution injection hole;
FIG. 4A and FIG. 4B are explanatory views of a manufacturing process, in which FIG. 4A is a diagram corresponding to FIG. 3 in a preparing step and FIG. 4B is a diagram corresponding to FIG. 3 in a sealing step; and
FIG. 5 is a diagram corresponding to FIG. 1 according to a modification.

### DETAILED DESCRIPTION OF THE PREFERRED EMBODIMENTS

Hereinafter, preferred embodiments of the art disclosed herein will be described with reference to the drawings as appropriate. Matters that are other than matters particularly mentioned in the present specification and that are necessary for the implementation of the art disclosed herein (for example, the general configuration and manufacturing process of an electrical energy storage device that do not characterize the art disclosed herein) can be grasped as design matters of those skilled in the art based on the prior art in the relevant field. The art disclosed herein can be implemented on the basis of the disclosure of the present specification and common technical knowledge in the relevant field. Moreover, in the present specification, the notation "A to B" for a range signifies a value more than or equal to A and less than or equal to B, and is meant to encompass also the meaning of being "preferably more than A" and "preferably less than B".

### <Electrical energy storage device 100>

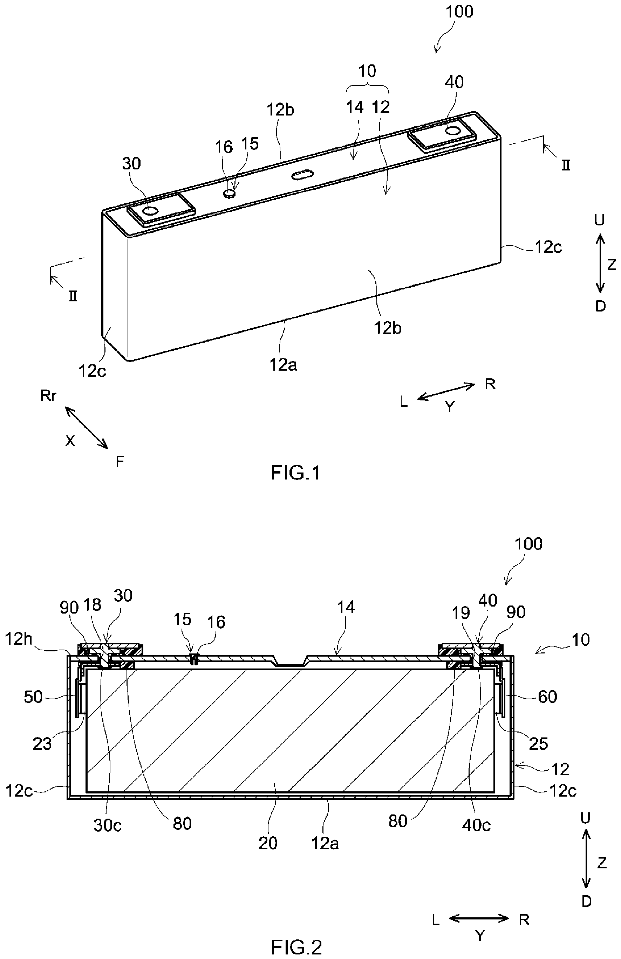

FIG. 1 is a perspective view of an electrical energy storage device 100. FIG. 2 is a schematic longitudinal cross-sectional view taken along line II-II in FIG. 1. Note that in the description below, the members and parts with the same operation are denoted by the same reference sign and the overlapping description may be omitted or simplified. In addition, reference signs F, Rr, L, R, U, and D in the drawings respectively denote front, rear, left, right, up, and down, and reference signs X, Y, and Z in the drawings respectively denote a short side direction of the electrical energy storage device 100, a long side direction that is orthogonal to the short side direction, and an up-down direction. The up-down direction Z is a direction that typically coincides with a vertical direction. However, these are merely directions for convenience of description and do not limit the mode of installation of the electrical energy storage device 100.

As illustrated in FIG. 2, the electrical energy storage device 100 includes a case 10, an electrode body 20, an electrolyte solution (not illustrated), a positive electrode terminal 30, a negative electrode terminal 40, and a sealing plug 16. The electrical energy storage device 100 is a nonaqueous electrolyte solution secondary battery here. The electrical energy storage device 100 is preferably a lithium ion secondary battery. Note that in the present specification, the term "electrical energy storage device" refers to general devices that are capable of being charged and discharged repeatedly, and corresponds to a concept encompassing secondary batteries such as lithium ion secondary batteries and nickel-hydrogen batteries and capacitors such as lithium ion capacitors and electrical double-layer capacitors.

The case 10 is a housing that accommodates the electrode body 20 and the electrolyte solution. Here, as illustrated in FIG. 1, the case 10 has an outer shape having a flat and bottomed rectangular parallelepiped shape (square shape). The material of the case 10 may be the same as a material that has been used conventionally, and is not particularly limited. The case 10 is preferably formed of a metal and is more preferably formed of, for example, aluminum, an aluminum alloy, iron, an iron alloy, or the like.

As illustrated in FIG. 2, in this embodiment, the case 10 includes a case main body 12 with a bottomed square shape (box shape) having an opening 12h on one surface (here, upper surface), and a sealing plate (lid body) 14 that seals the opening 12h of the case main body 12. The case 10 is integrated in such a way that the sealing plate 14 is bonded (for example, bonded by welding) to a periphery of the opening 12h of the case main body 12. The case 10 is hermetically sealed (closed).

As illustrated in FIG. 1, the case main body 12 includes a bottom surface 12a, a pair of long side surfaces 12b that extend from the bottom surface 12a and face each other, and a pair of short side surfaces 12c that extend from the bottom surface 12a and face each other. The bottom surface 12a has an approximately rectangular shape with a pair of short sides and a pair of long sides. The bottom surface 12a faces the opening 12h. The long side surfaces 12b extend from the pair of long sides of the bottom surface 12a. The short side surfaces 12c extend from the pair of short sides of the bottom surface 12a. In a plan view, the area of the long side surface 12b is larger than that of the short side surface 12c.

Note that in the present specification, the term "substantially rectangular shape" encompasses, in addition to a perfect rectangular shape (rectangle), for example, a shape whose corner connecting a long side and a short side of the rectangular shape is rounded, a shape whose corner includes a notch, and the like.

The sealing plate 14 is a plate-shaped member that closes the opening 12h of the case main body 12. The sealing plate 14 forms an upper surface of the case 10 here. The sealing plate 14 faces the bottom surface 12a of the case main body 12. The sealing plate 14 has a substantially rectangular shape in a plan view. As illustrated in FIG. 2, the sealing plate 14 is provided with an electrolyte solution injection hole 15 and two terminal extraction holes 18 and 19. The terminal extraction holes 18 and 19 penetrate the sealing plate 14 in the up-down direction Z. The terminal extraction holes 18 and 19 respectively have inner diameters that enable penetration of the positive electrode terminal 30 and the negative electrode terminal 40 before the electrode terminals are attached to the sealing plate 14 (before a caulking process).

The electrolyte solution injection hole 15 is used to inject the electrolyte solution after the sealing plate 14 is assembled to the case main body 12. The electrolyte solution injection hole 15 is a penetration hole penetrating the sealing plate 14 in the up-down direction Z. The electrolyte solution injection hole 15 has a substantially circular shape in a plan view here. The electrolyte solution injection hole 15 is sealed with the sealing plug 16 after the electrolyte solution is injected. The sealing plug 16 will be described below. Note that although the electrolyte solution injection hole 15 is provided in the sealing plate 14 in this embodiment, the electrolyte solution injection hole 15 may be provided in the case main body 12 in another embodiment (for example, in any of the bottom surface 12a, the long side surfaces 12b, and the short side surfaces 12c).

In this specification, the term "substantially circular shape" refers to not just a perfect circular shape (perfect circle) but also a circular shape in which the curvature of an arc is locally different (for example, ellipse), a shape derived from a perfect circle or a circle, and the like.

The positive electrode terminal 30 is disposed at an end part of the sealing plate 14 on one side in the long side direction Y (on a left end part in FIG. 1 and FIG. 2). As illustrated in FIG. 2, the positive electrode terminal 30 extends from the inside of the sealing plate 14 to the outside through the terminal extraction hole 18. Here, the positive electrode terminal 30 is caulked to a peripheral part of the sealing plate 14 that surrounds the terminal extraction hole 18 by caulking. A caulking part 30c is formed at an end part of the positive electrode terminal 30 on the case main body 12 side (a lower end part in FIG. 2). The positive electrode terminal 30 is preferably formed of a metal and is more preferably formed of, for example, aluminum or an aluminum alloy. The positive electrode terminal 30 is electrically connected to a positive electrode tab 23 of the electrode body 20 through a positive electrode current collecting part 50 inside the case 10. The positive electrode terminal 30 is insulated from the sealing plate 14 by an internal insulating member 80 and a gasket 90.

The negative electrode terminal 40 is disposed at an end part of the sealing plate 14 on the other side in the long side direction Y (on a right end part in FIG. 1 and FIG. 2). As illustrated in FIG. 2, the negative electrode terminal 40 extends from the inside of the sealing plate 14 to the outside through the terminal extraction hole 19. Here, the negative electrode terminal 40 is caulked to a peripheral part of the sealing plate 14 that surrounds the terminal extraction hole 19 by caulking. A caulking part 40c is formed at an end part of the negative electrode terminal 40 on the case main body 12 side (a lower end part in FIG. 2). The negative electrode terminal 40 is preferably formed of a metal and is more preferably formed of copper or a copper alloy, for example. The negative electrode terminal 40 is electrically connected to a negative electrode tab 25 of the electrode body 20 through a negative electrode current collecting part 60 inside the case 10. The negative electrode terminal 40 is insulated from the sealing plate 14 by the internal insulating member 80 and the gasket 90.

The electrode body 20 is accommodated inside the case 10. The structure and mode of the electrode body 20 may be similar to the conventional ones without particular limitations. The number of electrode bodies 20 to be accommodated in one case 10 is not limited in particular and may be one, or two or more (plural). Although the illustration is omitted, the electrode body 20 includes a positive electrode and a negative electrode typically. The positive electrode typically includes a positive electrode current collector and a positive electrode active material layer fixed on the positive electrode current collector. The negative electrode typically includes a negative electrode current collector and a negative electrode active material layer fixed on the negative electrode current collector. The electrode body 20 may be accommodated inside the case 10 while being covered with an insulating sheet (electrode body holder) made of resin.

The electrode body 20 is here a wound electrode body in which the positive electrode with a band shape and the negative electrode with a band shape are stacked through a separator with a band shape and wound in a longitudinal direction using a winding axis as a center. However, in another embodiment, the electrode body 20 may be a multilayer electrode body in which a plurality of positive electrodes with a square shape (typically, a rectangular shape) and a plurality of negative electrodes with a square shape (typically, a rectangular shape) are stacked on each other in an insulated state. In this embodiment, the electrode body 20 is disposed inside the case 10 with the winding axis substantially parallel to the long side direction Y However, in another embodiment, the electrode body 20 may be disposed inside the case 10 with the winding axis substantially parallel to the up-down direction Z, for example.

As illustrated in FIG. 2, the positive electrode tab 23 is provided in the positive electrode of the electrode body 20. The positive electrode tab 23 is a part of the positive electrode current collector here. The positive electrode tab 23 has a convex shape here, and protrudes from the electrode body 20 to one side in the long side direction Y (to the left side in FIG. 2). The positive electrode tab 23 is electrically connected to the positive electrode terminal 30 through the positive electrode current collecting part 50 here. In addition, the negative electrode tab 25 is provided in the negative electrode of the electrode body 20. The negative electrode tab 25 is a part of the negative electrode current collector here. The negative electrode tab 25 has a convex shape here, and protrudes from the electrode body 20 to the other side in the long side direction Y (to the right side in FIG. 2). The negative electrode tab 25 is electrically connected to the negative electrode terminal 40 through the negative electrode current collecting part 60 here.

The electrolyte solution may be similar to the conventional one without particular limitations. The electrolyte solution is typically a nonaqueous electrolyte solution containing a nonaqueous solvent and a supporting salt (electrolyte salt). However, the electrolyte solution may be an aqueous electrolyte solution containing an aqueous solvent. Examples of the nonaqueous solvent include carbonates such as ethylene carbonate, dimethyl carbonate, and ethyl methyl carbonate. The nonaqueous solvent preferably contains carbonates. In particular, the nonaqueous solvent preferably contains a cyclic carbonate and a chained carbonate. Examples of the supporting salt include fluorine-containing lithium salts such as lithium hexafluorophosphate (LiPF₆). The electrolyte solution may additionally contain an additive as necessary.

The sealing plug 16 is a member that is attached to the electrolyte solution injection hole 15 of the case 10 and closes the electrolyte solution injection hole 15. The sealing plug 16 is attached to the sealing plate 14 here. In this embodiment, the sealing plug 16 is attached to the case 10 (here, the sealing plate 14) by integral molding, which will be described in detail in the paragraphs about a manufacturing method. In another embodiment, however, the sealing plug 16 may be bonded to the case 10 by, for example, friction stir welding or the like, or may be bonded to the case 10 through an adhesive layer (adhesive or the like).

The sealing plug 16 is made of resin. The sealing plug 16 is preferably formed of a resin material that is excellent in sealability and moldability and has the resistance against the electrolyte solution to be used (electrolyte solution resistance) and the electrically insulating property. Specific examples include polyethylene (PE), polypropylene (PP), polyphenylene sulfide (PPS), perfluoroalkoxy alkane (PFA), perfluoroethylene propene copolymer (FEP), polyethylene terephthalate (PET), and the like. The resin material is preferably a thermoplastic resin. The resin material may contain a conventionally known additive or a filler such as ceramic.

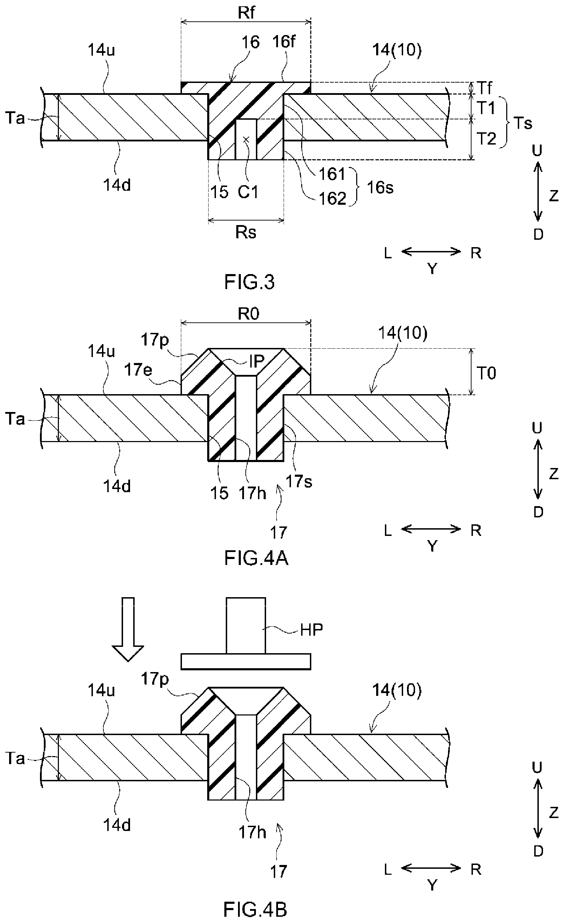

FIG. 3 is a longitudinal cross-sectional view schematically illustrating a vicinity of the electrolyte solution injection hole 15. As illustrated in FIG. 3, the sealing plug 16 includes a sealing plug shaft part 16s and a sealing plug flange part 16f. In this embodiment, the sealing plug shaft part 16s and the sealing plug flange part 16f are molded integrally (as one member) by integral molding, for example. Therefore, there is no explicit border between the sealing plug shaft part 16s and the sealing plug flange part 16f.

The sealing plug shaft part 16s is attached to the electrolyte solution injection hole 15. As illustrated in FIG. 3, an outer diameter Rs of the sealing plug shaft part 16s is substantially the same as the diameter of the electrolyte solution injection hole 15. The sealing plug shaft part 16s extends along the electrolyte solution injection hole 15. The axial line of the sealing plug shaft part 16s extends along the up-down direction Z here. The sealing plug shaft part 16s preferably covers the entire inner peripheral wall of the electrolyte solution injection hole 15. A thickness (average length in the up-down direction Z) Ts of the sealing plug shaft part 16s is preferably more than a base thickness (average length in the up-down direction Z at a place without unevenness) Ta of the sealing plate 14. An upper end part of the sealing plug shaft part 16s is connected to the sealing plug flange part 16f.

The sealing plug shaft part 16s is sectioned roughly into two regions in a direction where the electrolyte solution injection hole 15 extends (axial line direction, up-down direction Z in FIG. 3), and includes a columnar part 161 and a tubular part 162 that is hollow and is positioned on the inside (lower side in FIG. 3) of the case 10 relative to the columnar part 161. The columnar part 161 is a part that is connected to the sealing plug flange part 16f. The columnar part 161 has a substantially cylindrical columnar shape here.

The tubular part 162 is disposed at a lower end part of the sealing plug shaft part 16s, that is, at an end part of the sealing plug shaft part 16s on the side opposite to the side where the sealing plug flange part 16f exists. The tubular part 162 extends along the electrolyte solution injection hole 15. The tubular part 162 has a substantially cylindrical tubular shape that is hollow here. The tubular part 162 includes a cave part C1 extending along the up-down direction Z on an inner peripheral side in a radial direction of the sealing plug shaft part 16s. A thickness (average length in the up-down direction Z) T2 of the tubular part 162 is preferably more than or equal to a thickness (average length in the up-down direction Z) T1 of the columnar part 161. The thickness T2 of the tubular part 162 is preferably more than a thickness (average length in the up-down direction Z) Tf of the sealing plug flange part 16f. The tubular part 162 protrudes from the electrolyte solution injection hole 15 here, and extends downward (to the inside of the case 10) relative to a lower surface 14d of the sealing plate 14. A lower end part of the tubular part 162 preferably protrudes to the inside relative to the thickness of the case 10 (the lower surface 14d of the sealing plate 14). The total thickness (T1 + T2) of the sealing plug shaft part 16s is preferably more than the base thickness Ta of the sealing plate 14.

The sealing plug flange part 16f is provided integrally with the sealing plug shaft part 16s and extends to the outside of the case 10 from the sealing plug shaft part 16s. Specifically, the sealing plug flange part 16f extends continuously from an upper end part (columnar part 161) of the sealing plug shaft part 16s, and protrudes to the outside of the case 10 from the electrolyte solution injection hole 15 of the sealing plate 14. The sealing plug flange part 16f is in contact with an outer surface of the case 10 (an upper surface 14u of the sealing plate 14). An outer diameter Rf of the sealing plug flange part 16f is more than the outer diameter Rs of the sealing plug shaft part 16s. The outer diameter Rf of the sealing plug flange part 16f is more than the electrolyte solution injection hole 15. The sealing plug flange part 16f covers the electrolyte solution injection hole 15 from above and extends to a periphery of the electrolyte solution injection hole 15 on the upper surface 14u of the sealing plate 14. The sealing plug flange part 16f preferably has a substantially circular shape in a plan view. The sealing plug flange part 16f includes a flow mark derived from the manufacturing method to be described below, and the flow mark typically results from melting and solidifying of resin. The flow mark is preferably formed on at least a part of the sealing plug flange part 16f that overlaps with the electrolyte solution injection hole 15 in the plan view (here, right above the electrolyte solution injection hole 15).

The thickness Tf of the sealing plug flange part 16f is preferably less than the total thickness Ts of the sealing plug shaft part 16s. Although the illustration is omitted, the thickness Tf of the sealing plug flange part 16f is preferably less than the thickness (average length in the up-down direction Z) of the positive electrode terminal 30 and/or the negative electrode terminal 40. By suppressing the protruding height of the sealing plug flange part 16f, an interference of the sealing plug flange part 16f with another member, which results in damage or breakage of the sealing plug 16, can be suppressed.

Although there is no particular limitation, at least one of the inner peripheral wall of the electrolyte solution injection hole 15 of the case 10 (part where the sealing plug shaft part 16s is provided) and a peripheral part of the electrolyte solution injection hole 15 (part where the sealing plug flange part 16f is provided) on the upper surface (outer surface) 14u of the case 10 is preferably subjected to surface roughening processing. Thus, the adhesion between the case 10 and the sealing plug 16 can be improved and the sealability and the reliability of the sealing plug 16 can be improved. From the viewpoint of achieving such effects at a high level, the aforementioned surface roughening processing is preferably performed continuously in a circumferential direction of the electrolyte solution injection hole 15.

### <Manufacturing method for electrical energy storage device 100>

The electrical energy storage device 100 as described above can be manufactured by a manufacturing method including, for example, a preparing step (step S1), a liquid injecting step (S2), and a sealing step (step S3). The other manufacturing process may be similar to the conventional one. The manufacturing method disclosed herein may further include another step at an optional stage. FIG. 4A is a diagram corresponding to FIG. 3 in the preparing step (step S1) and FIG. 4B is a diagram corresponding to FIG. 3 in the sealing step (step S3). In the drawings, a side above the sealing plate 14 (upper surface 14u side) corresponds to the outside of the case 10 and a side below the sealing plate 14 (lower surface 14d side) corresponds to the inside of the case 10.

The preparing step (step S1) is a step of preparing an assembly including the case 10 including the electrolyte solution injection hole 15, in which a resin member 17 (see FIG. 4A) is attached to the electrolyte solution injection hole 15, and the electrode body 20 disposed in the case 10. Specifically, first, the sealing plate 14 including the electrolyte solution injection hole 15 is prepared and the resin member 17 is attached to the electrolyte solution injection hole 15, for example. In a preferred aspect, the resin member 17 is integrated with the case 10 (for example, sealing plate 14) by integral molding (insert molding). This can reduce the number of parts and reduce the cost. In addition, the resin member 17 can be attached to the case 10 more firmly. Note that when the resin member 17 is integrally molded to the case 10 (for example, to the sealing plate 14), at least one of the inner peripheral wall of the electrolyte solution injection hole 15 of the case 10 and the peripheral part of the electrolyte solution injection hole 15 on the upper surface (outer surface) 14u of the case 10 is preferably subjected to the surface roughening processing in advance.

The resin member 17 is a member to form the sealing plug 16 described above (specifically, the sealing plug shaft part 16s and the sealing plug flange part 16f). As illustrated in FIG. 4A, in this embodiment, the resin member 17 includes a shaft part 17s that is hollow and is attached to the electrolyte solution injection hole 15, a penetration hole 17h penetrating the resin member 17 along an axial line of the shaft part 17s, and a surplus part 17e that is integrated with the shaft part 17s and rises up at the periphery of the penetration hole 17h outside the case 10 (on the upper surface 14u side of the sealing plate 14 here). Providing the surplus part 17e and the shaft part 17s integrally can reduce the number of members to be used and reduce the cost compared to a case of providing the surplus part 17e and the shaft part 17s separately. In addition, the resin member 17 can be prepared more easily.

The shaft part 17s is a part that forms the sealing plug shaft part 16s of the sealing plug 16 through the sealing step (step S3) to be described below. The shaft part 17s extends along the electrolyte solution injection hole 15 (here, in the up-down direction Z). The shaft part 17s preferably covers the entire inner peripheral wall of the electrolyte solution injection hole 15. A lower end part of the shaft part 17s protrudes from the electrolyte solution injection hole 15, and extends downward (to the inside of the case 10) relative to the lower surface 14d of the sealing plate 14. The shaft part 17s being longer than the thickness of the sealing plate 14 makes it difficult for the electrolyte solution to drip from the electrolyte solution injection hole 15 in the liquid injecting step (step S2) to be described below. In addition, the electrolyte solution spreading along an end surface (lower end) of the shaft part 17s on the case 10 side to reach the interface with the sealing plate 14 can be suppressed. Thus, the sealability and the reliability can be enhanced.

The penetration hole 17h is a portion that can partially remain as the cave part C1 of the sealing plug 16 even after the sealing step (step S3) to be described below. The penetration hole 17h is not closed by the surplus part 17e and communicates between the inside and the outside of the case 10. The penetration hole 17h is provided on the inner peripheral side in the radial direction of the shaft part 17s here. Although there is no particular limitation, the diameter of the penetration hole 17h may be 1 mm or less when the electrolyte solution is injected using a liquid injection nozzle in the liquid injecting step (step S2) to be described below, for example.

The surplus part 17e is a part (scheduled melting part) that will be melted in the sealing step (step S3) to be described below. The surplus part 17e is a portion to form a part of the sealing plug shaft part 16s (columnar part 161) and the sealing plug flange part 16f of the sealing plug 16 through the sealing step (step S3). The surplus part 17e is provided so as to surround the penetration hole 17h (along the circumferential direction of the penetration hole 17h) in the plan view. Although the illustration is omitted, the surplus part 17e preferably has an annular shape in the plan view. Thus, a melting part can be secured easily and the electrolyte solution injection hole 15 can be sealed easily in the sealing step (step S3) to be described below. The surplus part 17e with the annular shape may have a notch partially. An outer diameter R0 of the surplus part 17e is typically more than the outer diameter of the shaft part 17s. The outer diameter R0 of the surplus part 17e is more than the electrolyte solution injection hole 15 here. Therefore, the surplus part 17e also expands to the periphery of the electrolyte solution injection hole 15 here.

A thickness (maximum length in the up-down direction Z) T0 of the surplus part 17e is typically more than the thickness Tf (see FIG. 3) of the sealing plug flange part 16f of the electrical energy storage device 100. The thickness T0 of the surplus part 17e is preferably less than or equal to the base thickness Ta of the sealing plate 14, although depending on the size of the penetration hole 17h, for example. Thus, the protruding height of the sealing plug flange part 16f can be suppressed in the electrical energy storage device 100.

It is preferable that the surplus part 17e be provided so as to surround the penetration hole 17h (along the circumferential direction of the penetration hole 17h) in the plan view and include a projection part 17p protruding in a direction away from the case 10. Thus, the melting part can be increased in the sealing step (step S3) and the sealability and the reliability of the electrolyte solution injection hole 15 can be increased. Although the illustration is omitted, the projection part 17p preferably has an annular shape in the plan view. The annular projection part 17p may have a notch partially. As illustrated in FIG. 4A, the projection part 17p preferably has an inclination surface IP that is inclined toward the penetration hole 17h (to the inner peripheral side in the radial direction). This makes it easier for the melting part to flow toward the penetration hole 17h in the sealing step (step S3). In the plan view, the position of an upper end of the projection part 17p preferably exists overlapping with the position of an outer edge of the electrolyte solution injection hole 15 or on the inside in the radial direction relative to that position.

In this step, the electrode body 20 is prepared next, and the positive electrode current collecting part 50 is attached to the positive electrode tab 23 and the negative electrode current collecting part 60 is attached to the negative electrode tab 25 in the electrode body 20. Next, the sealing plate 14 with the resin member 17 attached thereto, the positive electrode terminal 30, and the negative electrode terminal 40 are prepared, and the positive electrode terminal 30, the negative electrode terminal 40, the positive electrode current collecting part 50, and the negative electrode current collecting part 60 are attached to the sealing plate 14. Thus, the sealing plate 14, the positive electrode terminal 30, the negative electrode terminal 40, and the electrode body 20 are integrated. Next, the case main body 12 is prepared, the electrode body 20 integrated with the sealing plate 14 is accommodated in the internal space of the case main body 12, and the opening 12h of the case main body 12 is sealed with the sealing plate 14. The sealing can be performed by, for example, bonding by welding such as laser welding. In this manner, the assembly is prepared.

The liquid injecting step (step S2) is a step of injecting the electrolyte solution into the case 10 through the electrolyte solution injection hole 15. In a preferred aspect, the liquid injection is performed using a conventionally known electrolyte solution injection device (not illustrated) including a liquid injection nozzle to inject the electrolyte solution, an electrolyte solution storage part that communicates with the liquid injection nozzle, and liquid sending means that sends the electrolyte solution from the electrolyte solution storage part to the liquid injection nozzle (for example, pressure pump). In this case, the electrolyte solution is injected with the liquid injection nozzle inserted to the penetration hole 17h and after the liquid injection, the liquid injection nozzle is pulled out of the penetration hole 17h. Thus, the electrolyte solution can be injected smoothly even when the diameter of the penetration hole 17h is as small as 1 mm or less, for example. In another embodiment, however, the liquid may be injected using a dispenser or the like, for example. In this embodiment, since the length of the shaft part 17s of the resin member 17 in the horizontal direction is longer than the thickness of the sealing plate 14, the electrolyte solution spreading along an end surface (left end) of the shaft part 17s on the case 10 side to reach the interface with the sealing plate 14 can be suppressed.

The sealing step (step S3) is a step of sealing the electrolyte solution injection hole 15. In this embodiment, the surplus part 17e is melted at least outside the case 10 (here, on the upper surface 14u of the sealing plate 14). The surplus part 17e flows along the upper surface 14u of the sealing plate 14, flows into the penetration hole 17h, and is cooled so as to be solidified. Accordingly, the penetration hole 17h is closed and in the end, a part of the sealing plug shaft part 16s (columnar part 161) is molded. In addition, a surplus part that did not flow into the penetration hole 17h molds the sealing plug flange part 16f By melting the surplus part 17e, the electrolyte solution injection hole 15 can be sealed more easily than before, and the workability and productivity can be improved.

The surplus part 17e may be melted by any method without particular limitations, and one example is a contact type heating method in which a heating medium is directly brought into contact with the surplus part 17e outside the case 10. Thus, the surplus part 17e is locally melted to facilitate the flow. Examples of the contact type heat processing method include thermal pressing, ultrasonic heating, impulse fusing, and the like. However, the heat processing method may alternatively be a non-contact type heat processing method such as laser heating.

In a preferred aspect, the surplus part 17e is melted by thermal pressing. In the thermal pressing, for example as illustrated in FIG. 4B, a heated metal plate (heating medium) HP is brought into contact with the surplus part 17e from above and pressed against the upper surface 14u of the sealing plate 14. The temperature of the metal plate HP is preferably more than or equal to the melting point (for example, melting point + 5°C or more) of the resin material of the surplus part 17e so that the surplus part 17e is melted easily. By employing the thermal pressing, the electrolyte solution injection hole 15 can be sealed more easily and the workability can be improved. In addition, the sealing plug flange part 16f with the flat upper surface can be molded easily and the interference of the sealing plug flange part 16f with another member, which results in the damage or breakage of the sealing plug 16, can be suppressed. In this manner, the resin member 17 is molded to the sealing plug 16 and the electrolyte solution injection hole 15 is sealed. In the end, the electrical energy storage device 100 is sealed.

### <Application of electrical energy storage device 100>

The electrical energy storage device 100 can be used in various applications, and for example, suitably used as a motive power source (electrical power source for driving) for a motor mounted on a vehicle such as a passenger car or a truck. Although the type of vehicles is not particularly limited, examples thereof may include a plug-in hybrid electric vehicle (PHEV), a hybrid electric vehicle (HEV), a battery electric vehicle (BEV), and the like.

Although the preferable embodiments of the present disclosure have been described above, they are merely examples. The present disclosure can be implemented in various other modes. The present disclosure can be implemented based on the contents disclosed in the present specification and the technical common sense in the relevant field. The techniques described in the scope of claims include those in which the embodiments exemplified above are variously modified and changed. For example, another modification can replace a part of the aforementioned embodiment or be added to the aforementioned embodiment. Additionally, the technical feature may be deleted as appropriate unless such a feature is described as an essential element.

For example, in the aforementioned embodiment, the case 10 includes the case main body 12 with a bottomed square shape (box shape) having the opening 12h on one surface, and one sealing plate 14 that closes the opening 12h of one surface of the case main body 12. In addition, the positive electrode terminal 30, the negative electrode terminal 40, and the electrolyte solution injection hole 15 are provided in one sealing plate 14. However, the present disclosure is not limited to this example.

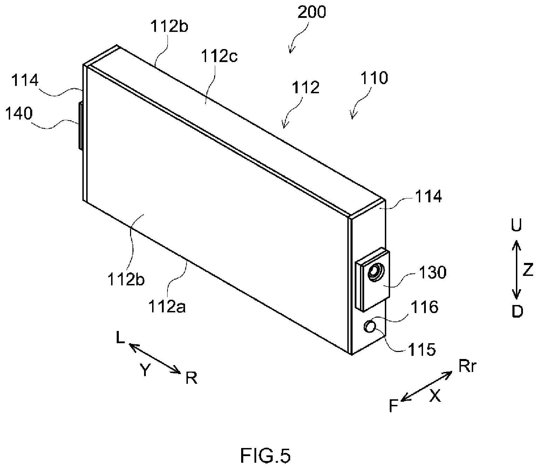

FIG. 5 is a diagram corresponding to FIG. 1 according to a modification. An electrical energy storage device 200 illustrated in FIG. 5 may be similar to the electrical energy storage device 100 except that the electrical energy storage device 200 includes a case 110, a positive electrode terminal 130, and a negative electrode terminal 140. The case 110 includes a case main body 112 with a rectangular tubular shape having a pair of openings at both end parts in the long side direction Y, and two sealing plates 114 that close the pair of openings of the case main body 112. The case main body 112 includes a bottom surface 112a with a substantially rectangular shape having a pair of short sides and a pair of long sides, a pair of long side surfaces 112b extending from the pair of long sides of the bottom surface 112a and facing each other, and a top surface 112c facing the bottom surface 112a. The case main body 112 is formed by, for example, bending one metal plate into a rectangular tubular shape and bonding (for example, bonding by welding) the joint. The sealing plate 114 is a plate-shaped member.

In this modification, the positive electrode terminal 130 is provided in a first sealing plate 114 (right sealing plate 14 in FIG. 5) and the negative electrode terminal 140 is provided in a second sealing plate 114 (left sealing plate 14 in FIG. 5). In addition, an electrolyte solution injection hole 115 is provided in the first sealing plate 114 together with the positive electrode terminal 130. However, the electrolyte solution injection hole 115 may be provided in the second sealing plate 114 or may be provided in the case main body 12 (for example, any of the bottom surface 112a, the long side surfaces 112b, and the top surface 112c). The electrolyte solution injection hole 115 is sealed with a sealing plug 116.

As described above, the following items are given as specific aspects of the art disclosed herein.
Item 1: The manufacturing method for an electrical energy storage device, including: the preparing step of preparing the assembly including the case that includes the electrolyte solution injection hole, in which the resin member is attached to the electrolyte solution injection hole, and the electrode body that is disposed in the case; the liquid injecting step of injecting the electrolyte solution from the electrolyte solution injection hole into the case; and the sealing step of sealing the electrolyte solution injection hole after the liquid injecting step, in which the resin member includes the shaft part that is hollow and is attached to the electrolyte solution injection hole, the penetration hole that penetrates the resin member along the axial line of the shaft part, and the surplus part that is provided integrally with the shaft part and rises up at the periphery of the penetration hole outside the case, and in the sealing step, the penetration hole is closed by melting at least the surplus part.
Item 2: The manufacturing method according to Item 1, in which in the liquid injecting step, the liquid injection nozzle is inserted into the penetration hole to inject the electrolyte solution and after the liquid injection, the liquid injection nozzle is pulled out of the penetration hole.
Item 3: The manufacturing method according to Item 1 or 2, in which the resin member is integrally molded with the case.
Item 4: The manufacturing method according to any one of Items 1 to 3, in which the surplus part of the resin member is provided so as to surround the penetration hole in the plan view and includes the projection part protruding in the direction away from the case.
Item 5: The manufacturing method according to Item 4, in which the projection part includes the inclination surface that is inclined toward the penetration hole.
Item 6: The manufacturing method according to any one of Items 1 to 5, in which in the sealing step, the surplus part is melted by the thermal pressing.
Item 7: The electrical energy storage device including the case that includes the electrolyte solution injection hole, the electrode body and the electrolyte solution that are disposed in the case, and the sealing plug that closes the electrolyte solution injection hole of the case, in which the sealing plug is made of resin, and includes the sealing plug shaft part attached to the electrolyte solution injection hole, and the sealing plug flange part that is provided integrally with the sealing plug shaft part and expands in the radial direction of the sealing plug shaft part outside the case, and the tubular part that is hollow is provided at the end part of the sealing plug shaft part on the side opposite to the side where the sealing plug flange part exists.
Item 8: The electrical energy storage device according to Item 7, in which the sealing plug flange part includes the flow mark.
Item 9: The electrical energy storage device according to Item 7 or 8, in which the sealing plug is integrally molded with the case.
Item 10: The electrical energy storage device according to any one of Items 7 to 9, in which the tubular part of the sealing plug protrudes to the inside relative to the thickness of the case.

### [Reference Signs List]

10, 110 Case
12, 112 Case main body
14, 114 Sealing plate
15, 115 Electrolyte solution injection hole
16, 116 Sealing plug
16s Sealing plug shaft part
161 Columnar part
162 Tubular part
16f Sealing plug flange part
20 Electrode body
100 Electrical energy storage device
17 Resin member
17s Shaft part
17h Penetration hole
17e Surplus part
17p Projection part

## Claims

1. A manufacturing method for an electrical energy storage device (100), comprising:
a preparing step of preparing an assembly including a case (10) that includes an electrolyte solution injection hole (15), in which a resin member (17) is attached to the electrolyte solution injection hole (15), and an electrode body (20) that is disposed in the case (10);
a liquid injecting step of inj ecting an electrolyte solution from the electrolyte solution injection hole (15) into the case (10); and
a sealing step of sealing the electrolyte solution injection hole (15) after the liquid injecting step, wherein
the resin member (17) includes a shaft part (17s) that is hollow and is attached to the electrolyte solution injection hole (15), a penetration hole (17h) that penetrates the resin member (17) along an axial line of the shaft part (17s), and a surplus part (17e) that is provided integrally with the shaft part (17s) and rises up at a periphery of the penetration hole (17h) outside the case (10), and
in the sealing step, the penetration hole (17h) is closed by melting at least the surplus part (17e).

2. The manufacturing method according to claim 1, wherein in the liquid injecting step, a liquid injection nozzle is inserted into the penetration hole (17h) to inject the electrolyte solution and after liquid injection, the liquid injection nozzle is pulled out of the penetration hole (17h).

3. The manufacturing method according to claim 1 or 2, wherein the resin member (17) is integrally molded with the case (10).

4. The manufacturing method according to any one of claims 1 to 3, wherein the surplus part (17e) of the resin member (17) is provided so as to surround the penetration hole (17h) in a plan view and includes a projection part (17p) protruding in a direction away from the case (10).

5. The manufacturing method according to claim 4, wherein the projection part (17p) includes an inclination surface (IP) that is inclined toward the penetration hole (17h).

6. The manufacturing method according to any one of claims 1 to 5, wherein in the sealing step, the surplus part (17e) is melted by thermal pressing.

7. An electrical energy storage device (100) comprising a case (10) that includes an electrolyte solution injection hole (15), an electrode body (20) and an electrolyte solution that are disposed in the case (10), and a sealing plug (16) that closes the electrolyte solution injection hole (15) of the case (10), wherein
the sealing plug (16) is made of resin, and includes a sealing plug shaft part (16s) attached to the electrolyte solution injection hole (15), and a sealing plug flange part (16f) that is provided integrally with the sealing plug shaft part (16s) and expands in a radial direction of the sealing plug shaft part (16s) outside the case (10), and
a tubular part (162) that is hollow is provided at an end part of the sealing plug shaft part (16s) on a side opposite to a side where the sealing plug flange part (16f) exists.

8. The electrical energy storage device (100) according to claim 7, wherein the sealing plug flange part (16f) includes a flow mark.

9. The electrical energy storage device (100) according to claim 7 or 8, wherein the sealing plug (16) is integrally molded with the case (10).

10. The electrical energy storage device (100) according to any one of claims 7 to 9, wherein the tubular part (162) of the sealing plug (16) protrudes to inside relative to a thickness of the case (10).
